# EUROPEAN PATENT APPLICATION

(11) **EP 2 538 419 A2**
(43) Date of publication of application: **26.12.2012**
(21) Application number: 12172671.5
(22) Date of filing: 20.06.2012
(51) Int. Cl.: H01F 7/08

(54) **Cooling device for electrical device and method of cooling an electrical device**

(30) Priority: 24.06.2011 US 201113168663
(71) Applicant: General Electric Company, Schenectady, NY 12345 (US)
(72) Inventor: Wagoner, Robert Gregory, Salem VA Virginia 24018 (US); Kuhn, Harald, 85748 Munich (DE)
(74) Representative: Bedford, Grant Richard

(57) **Abstract**

A cooling device (16) for an electrical apparatus (5) having an air gap (22). The cooling device (16) includes a heat transfer element (24) coupled to the core (12). The heat transfer element (24) includes a first material (32) to facilitate transferring heat out of the core (12). The cooling device (16) further includes an electrical insulator (26) coupled to the heat transfer element (24). The insulator (26) includes a second material (40) to facilitate flow of magnetic flux (34) across the air gap (22).

## Description

The subject matter described herein relates generally to cooling an electrical device, and in particular, a heat transfer element for cooling a magnetic inductor.

One type of electrical device includes an inductor, which is a passive electrical component that stores energy in a magnetic field created by electric current passing through the inductor. The inductor includes a conductive coil of material (e.g., wire or foil) wrapped around a core of air or a ferromagnetic material (magnetic core). Passing electrical current through the conductive coil generates a magnetic flux Φₘ that is conducted in the core and that is proportional to the current.

The inductor is characterized by a high permeability (for example µₘ (> 1000)) and therefore a low magnetic resistance (for example *R*ₘ ∼ 1/ (µₘ µ )). High permittivity material, however, is sensitive to temperature, pressure, voltage and frequency. Further, magnetic energy that is stored in an inductive component is proportional to the square of the magnetic flux Φₘ and indirectly proportional to the permeability of the material µₘ. Thus, a good magnetic inductor could result in low energy storage.

To minimize these sensitivities and shortcomings, one or more air gaps are inserted in the inductor. In some known inductors, the air gaps are filled with a gap material. Gap material includes material such as paper, nylon or glass. Inserting air gaps in the inductor, however, facilitates the magnetic flux leaving the magnetic core while crossing the air gap. In crossing the air gap, the flux fringes out. The fraction of the total magnetic flux Φₘ that fringes out is known as fringing flux Φ_{m,fring}.

The inductor may experience energy loss attributed to the fluctuating magnetic field, such as eddy loss currents and hysteresis loss. This energy loss is known as core losses. The core losses are caused by the non-linear hysteresis-afflicted interrelationship between the exciting magnetic voltage and the flux density of the magnetic circuit. Due to the alternating flux in the magnetic material, eddy currents are induced in the magnetic core. The intensity of the eddy currents, and therefore, the eddy current losses depend on the electrical conductivity of the core material. Further, the inherent resistance of coils converts a portion of electrical current flowing through the coils into thermal energy, causing a loss of inductive quality. This loss is known as coil loss. Any electrically conductive material in the area of fringing flux will exhibit high power loss.

The coil and core losses are generated within the inductor as heat. The build up of heat due to coil losses and core losses may reduce performance of the inductor, and lead to failure of the electrical device. To reduce the eddy current losses, some known conductors include laminations to reduce the electrical conductivity of the magnetic core.

Known conductors also apply a liquid-cooled heat sink to the magnetic core. The material of the heat sink is commonly a thermal conductor to facilitate heat transfer between the core and the heat-sink. Close to the air gaps, the alternating fringing flux Φ_{m,fring} enters and penetrates the heat sinks. Generally, a material that has good thermal conducting properties is also a good electrical conductor. As noted, flux penetrating an electrical conducting compound causes eddy current losses. Thus, eddy losses occur in the heat sink near or about the air gaps. Accordingly, the inductor loses energy while the cooling liquid is heated up by the losses originating from the inductor.

In one aspect according to the present invention, a cooling device is provided for cooling an electrical device having an air gap. The cooling device includes a heat transfer element coupled to a core of the electrical device. The heat transfer element includes a first material to facilitate transferring heat out of the core. The cooling device further includes an electrical insulator coupled to the heat transfer element. The insulator includes a second material to facilitate flow of magnetic flux across the air gap.

In another aspect, an electrical device is provided. The electrical device includes a magnetic core having an air gap, a conductive coil and a cooling device. The cooling device includes a heat transfer element coupled to a core of the electrical device. The heat transfer element includes a first material to facilitate transferring heat out of the core. The cooling device further includes an electrical insulator coupled to the heat transfer element. The insulator includes a second material to facilitate flow of magnetic flux across the air gap.

In a further aspect, a method of cooling an electrical device is provided. The method includes disposing a conductive coil around a magnetic core having an air gap. The method also includes disposing a heat transfer element between the core and the coil to facilitate heat transfer out of the core. An electrical insulator is disposed between the air gap and said coil, wherein the electrical insulator is configured to facilitate current flow through the core. The heat transfer element and electrical insulator are coupled together.

Various aspects and embodiments of the present invention will now be described in connection with the accompanying drawings, in which:
Fig. 1 is a perspective view of an exemplary electrical device.
Fig. 2 is a perspective view of a core of an inductor of the electrical device of Fig. 1 having an air gap disposed therein.
Fig. 3 is an exaggerated, partial cross sectional view of an exemplary cooling device coupled to the core.
Fig. 4 is an exaggerated, partial cross sectional view of another exemplary cooling device coupled to the core.
Fig. 5 is a flowchart of an exemplary method for use in manufacturing the cooling device of Fig. 3.
Fig. 6 is a schematic view of a wind turbine.
Fig. 7 is a partial sectional view of a generator of the wind turbine of Fig. 6 that may use the exemplary cooling device.

Various electronic devices benefit from the use of magnetic circuits. The cooling device described herein facilitates heat transfer and electrical conductivity for the magnetic circuit. Heat may degrade the performance of an inductor of the electrical device, or may cause degradation and premature failure of the device. Accordingly, the cooling device and method described herein remove thermal energy from the core of the conductor while reducing eddy current losses and magnetizing losses across air gaps of the core.

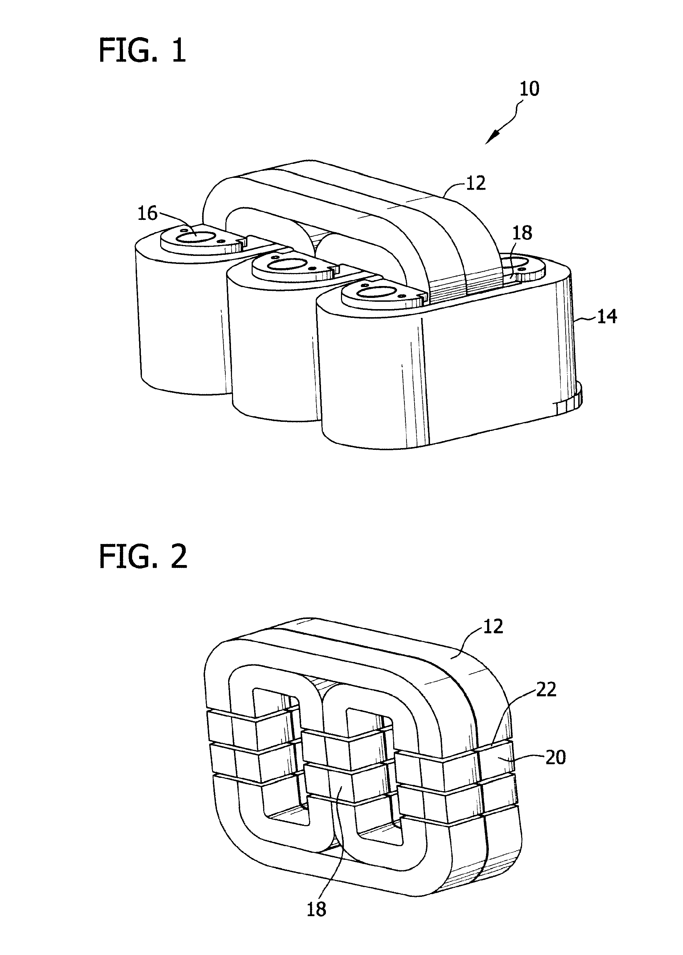

Fig. 1 illustrates a perspective view of an exemplary electrical device 5. Electrical device 5 herein relates to any shape and application of a magnetic circuit such as, but not limited to, conductors, transformers, galvanic isolation and inductors. For illustrative purposes, the electrical device described will be in the form of an inductor 10. Configurations and the design of the exemplary inductor 10 may vary based on specific applications. For example, inductor 10 may include a single conductive coil disposed about a single magnetic core. In other embodiments, inductor 10 may include multiple conductive coils, each wound about a portion of the magnetic core. The design of inductor 10 may be varied to meet specific applications and the desired performance.

In the exemplary embodiment, inductor 10 includes a magnetic core 12, conductive coils 14, and a cooling device 16. Conductive coils 14 surround the magnetic core 12, with cooling device 16 orientated in a cooperative relationship with conductive coil 14 and magnetic core 12. Conductive coil 14 includes various features for use within the inductor 10. In one embodiment, conductive coil 14 includes material disposed about a central region 18. Central region 18 includes an opening configured to accommodate at least a portion of magnetic core 12. Further, central region 18 provides a location to orientate cooling device 16. Conductive coil 14 includes a variety of materials such as, but not limited to, copper, aluminum or steel windings.

Fig. 2 illustrates a perspective view of core 12. In the exemplary embodiment, core 12 includes a "figure-eight" shaped geometry. In this configuration, each leg 20 of magnetic core 12 may be surrounded by conductive coil 14. The geometry of magnetic core 12 includes other configurations depending on the application. For example, other configurations of magnetic core 12 include "I", "C," "E," toroidal, planar, or pot shaped geometries. Magnetic core 12 may also include a geometry formed from a combination of shapes. For example, the figure-eight shape shown in Fig. 2 may include an "I" shaped piece and an "E" shaped piece, or two "E" shaped pieces, combined to form single magnetic core 12.

Core 12 includes at least one air gap 22 disposed within core 12. Air gap 22 includes any void of material or equivalent filler of nonmagnetic material within core 12. The gap material facilitates keeping the distance between the adjacent core parts constant and facilitates a stable design and operation for inductor 10. The gap material includes materials such as nylon, paper, glass, and any nonmagnetic material immune to saturation.

Magnetic core 12 includes various materials suitable for use in inductor 10. In the exemplary embodiment, core 12 includes a metal material. In one embodiment, magnetic core 12 includes metals such as, but not limited to, copper, aluminum, iron or steel. In other embodiments, core 12 includes various materials such as iron alloyed with silicon, carbonyl iron and ferrite ceramics. Further, various forming techniques, such as laminations and the like, may be utilized to form magnetic core 12.

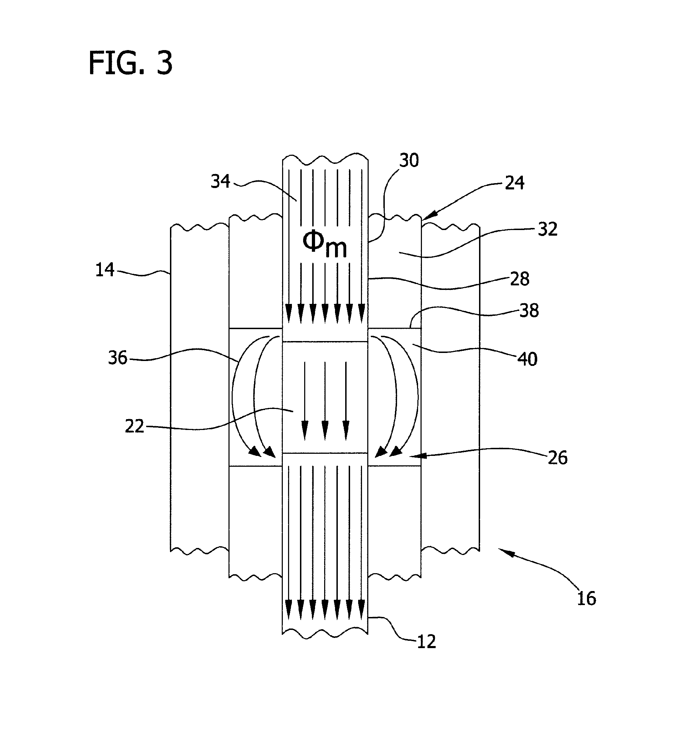

Fig. 3 is an exaggerated, partial cross sectional view of exemplary cooling device 16 coupled to core 12. Cooling device 16 includes a heat transfer element 24 and an electrical insulator 26. Heat transfer element 24 couples to core 12 at portions 28 orientated on opposite sides of air gap 22. In the exemplary embodiment, a surface 30 of heat transfer element 24 is generally shaped to provide contact between core portion 28 and heat transfer element 24. Contact between surface 30 of heat transfer element 24 and core portion 28 facilitates efficient transfer of thermal energy between core 12 and heat transfer element 24. Thus, heat from core 12 is more efficiently removed by heat transfer element 24.

Heat transfer element 24 includes other configurations such as, but not limited to, heat fins, heat exchangers and cooling tubes. Heat transfer element 24 includes any configuration that facilitates transferring heat out of and away from core 12.

Heat transfer element 24 includes a first material 32 wherein the composition of first material 32 includes a thermally conductive material. First material 32 facilitates heat transfer out of core 12. In the exemplary embodiment, first material 32 facilitates transferring heat generated as a result of core losses and coil losses. First material 32 includes materials such as, but not limited to, metals, plastics and composites. More specifically, first material 32 includes materials such as aluminum, copper, conductive plastics and conductive composites. First material 32 may also include any material that facilitates heat transfer out of core 12.

Insulator 26 is coupled to at least one of core 12, air gap 22 and the heat transfer element 24. Electrical insulator 26 facilitates flow of magnetic flux 34 across air gap 22 and through core 12. Electrical insulator 26 also facilitates reducing eddy current losses and magnetizing losses 36 emanating from air gap 22. In the exemplary embodiment, electrical insulator 26 couples to portions 28 of core 12. Core portions 28 are orientated on opposite sides of air gap 22. Additionally, electrical insulator 26 couples to heat transfer element 24 near opposing sides of air gap 22. In this orientation, electrical insulator 26 is located about air gap 22 and between portions 28 of heat transfer element 24.

In one embodiment, a fastener 38 thermally couples insulator 26 to heat transfer element 24. In the exemplary embodiment, fastener 38 includes a thermal adhesive. Fastener 38 may include any connection that facilitates connecting electrical insulator 26 to heat transfer element 24.

Electrical insulator 26 includes a second material 40 including an electrically insulating material having low conductivity and high resistivity characteristics. In the exemplary embodiment, the composition of second material 40 is different than the composition of first material 32. Second material 40 facilitates flow of magnetic flux 34 across air gap 22 and through core 12. Second material 40 facilitates reducing eddy current losses and reducing magnetizing losses 36 emanating from air gap 22. The second material 40 includes materials such as, but not limited to, plastic, glass and silicone. Second material 40 may include any material that facilitates flow of magnetic flux 34 within core 12 and reduces core losses and coil losses.

During one mode of operation of inductor 10, current is passed through conductive coils 14. In response, magnetic flux 34 is generated and conducted within core 12. Heat transfer element 24 transfers heat generated by coils 14 and heat generated in response to eddy current losses and magnetizing losses 36. The low conductivity and high resistivity of insulator 26 opposes magnetic flux 34 leaving air gap 22 and reduces losses emanating from air gap 22.

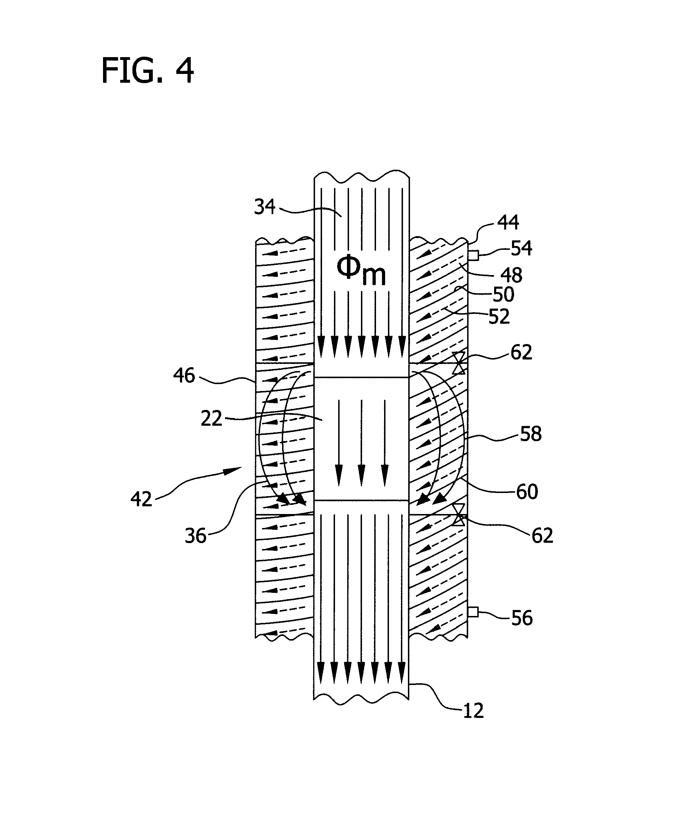

Fig. 4 illustrates another exemplary embodiment of a cooling device 42 having a heat transfer element 44 and insulator 46. Heat transfer element 44 includes at least one body 48 having channels 50 sized and orientated to circulate a cooling fluid 52 through heat transfer element 44. Body 48 couples to core 12 on opposite sides of air gap 22. The circulation of cooling fluid 52 facilitates removing heat from heat transfer element 44; and, thus, promotes heat exchange between heat transfer element 44 and components of inductor 10. Body 48 includes a coolant inlet 54 configured to receive cooling fluid 52 from an external source, such as a fluid pump (not shown.) Body 48 further includes a coolant outlet 56 configured to discharge cooling fluid 52 to an external source, such as a reservoir (not shown.) In the exemplary embodiment, cooling fluid 52 includes a liquid such as a water based liquid or oil. Cooling fluid 52 includes any gas or liquid capable of being passed through heat transfer element 44 and including thermal properties beneficial to absorbing heat from body 48 of heat transfer element 44.

Electrical insulator 46 includes another body 58 sized and orientated to couple with channel 50. Body 58 also couples core 12. Body 58 includes an electrically insulating material having low conductivity and high resistivity characteristics. Composition of the material of insulator 46 is different than the composition of channel 50 and/or cooling fluid 52. Material of insulator 46 facilitates flow of magnetic flux 34 across air gap 22 and through core 12 while reducing eddy current losses and magnetizing losses 36 from air gap 22. Further, insulator 46 facilitates flow of cooling fluid 52 in the area across air gap 22 while insulator 46 will experience minimal or no power loss due to flux 34.

In the exemplary embodiment, body 58 includes a hose 60. A fastener 62 couples hose 60 to channel 50. In the exemplary embodiment, fastener 38 includes at least one valve with associated fittings (not shown) to facilitate coupling hose 60 to channel 50. Fastener 62 includes any connector that facilitates connection between hose 60 and channel 50.

Hose 60 has an internal diameter in the range between about 6 mm and about 13 mm. Hose 60 includes materials such as, but not limited to, rubber and plastic. Hose 60 includes any sizing, orientation and composition that facilitate flow of cooling fluid 52 from, and back into, channel 50. Hose 60 also includes any sizing, orientation and composition that facilitate flow of magnetic flux 34 within core 12 and reduce eddy current losses and magnetizing losses 36 from air gap 22.

During operation, cooling fluid 52 enters channels 50 via coolant inlet 54 and flows through channels 50 internal to heat transfer element 44. After flowing through channels 50, fluid 52 flows into hose 60 via open fastener 62. Fluid 52 flows through hose 60 and re-enters the channel via another fastener 62. Fluid 52 exits channel 50 via heat transfer outlet 56. The circulation of cooling fluid 52 through heat transfer element 44 provides for an increased rate transfer of thermal energy from other components of inductor 10, such as conductive coils 14 and core 12. The material of hose 60 facilitates flow of magnetic flux 34 across air gap 22 and facilitates reducing core and coil losses from air gap 22. Further, hose 60 facilitates flow of cooling fluid 52 in the area across air gap 22 while insulator 46 will experience minimal or no power loss due to flux 34.

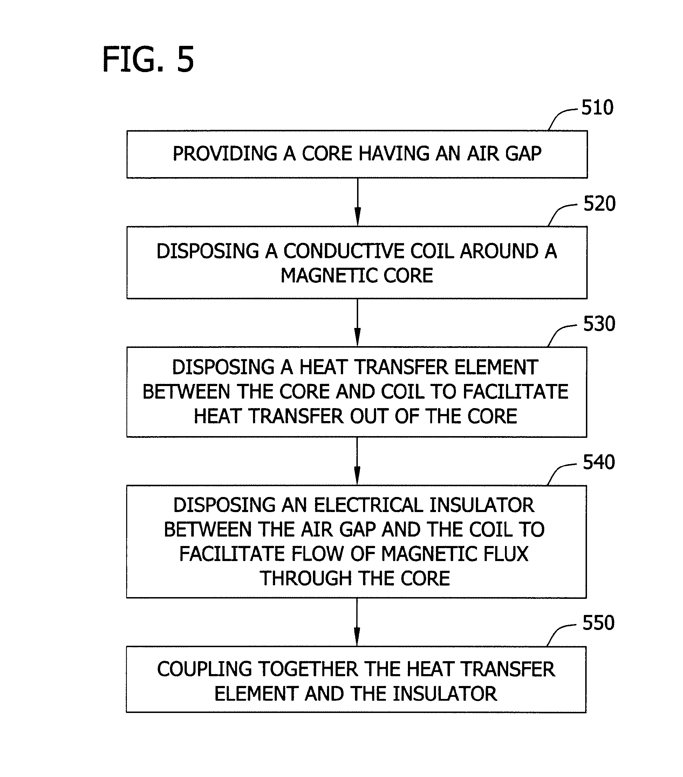

Fig. 5 illustrates a flowchart of an exemplary method for use in manufacturing the electrical device 5 of Fig. 1. In the exemplary embodiment, any or all of the manufacturing processes can be performed on a new assembly of an electrical device or integrated with an existing electrical device. Initially, core 12 is provided 510 having at least one air gap 22. A conduit coil 14 is disposed 520 around core 12. Next, heat transfer element 24 is disposed 530 between core 12 and coil 14. Insulator 26 is disposed 540 between air gap 22 and coil 14. Insulator 26 is then coupled 550 to heat transfer element 24.

The cooling device 16 may have a variety of shapes, sizes, orientations and compositions to facilitate removing heat from components of the inductor, including the magnetic core 12 and the conductive coil 14. The cooling device 16 may also have a variety of shapes, sizes, orientations and compositions to facilitate magnetic flux flow across the air gap 22 and through the core 12 while reducing core and coil losses from the air gap.

For example, in one embodiment, the cooling device includes a shape (not shown) configured to conform to curvatures of the conductive coils. The cooling device may be disposed within the conductive coil that has been formed prior to placement of the cooling device. In another embodiment, the conductive coil may conform to the shape of the cooling device. For instance, forming the conductive coil may include fixing the cooling devices in a position and subsequently wrapping the windings of the conductive coil about the cooling device. The generally shared interface at each end turn may promote contact of the conductive coil and the cooling device such that thermal energy may be more efficiently transferred between the conductive coil and the cooling device. For example, disposing the conductive coil and the cooling device such that they are proximate one another along the curved surface may reduce thermal resistance across the interface, and, thus, promote the transfer of thermal energy between the conductive coil and the cooling device. Thus, heat from the electrical device may be more efficiently removed by the cooling device. Conforming the shape of the cooling device to the core and/or the coil also facilitates flow of magnetic flux across the air gap and through the core while reducing core and coil losses emanating from the air gap.

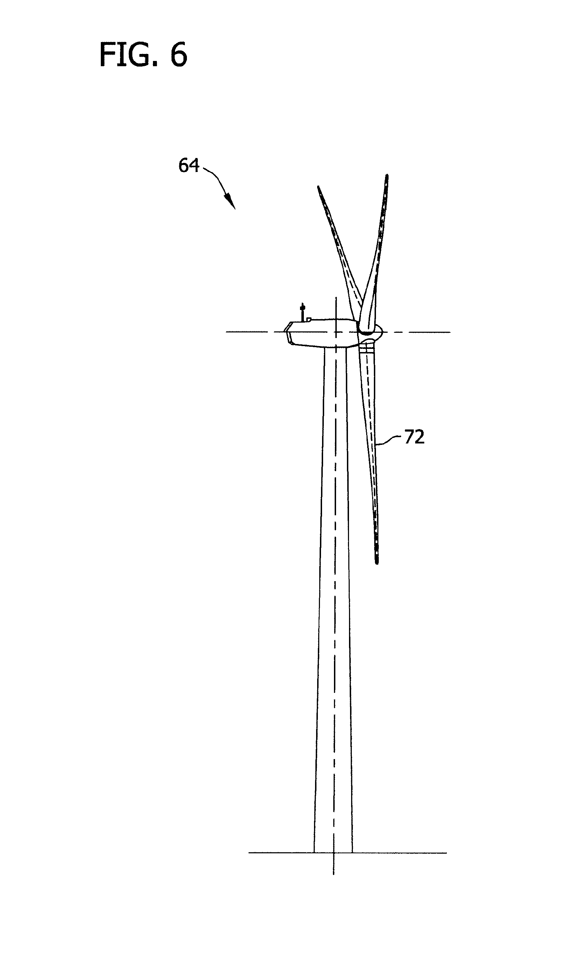

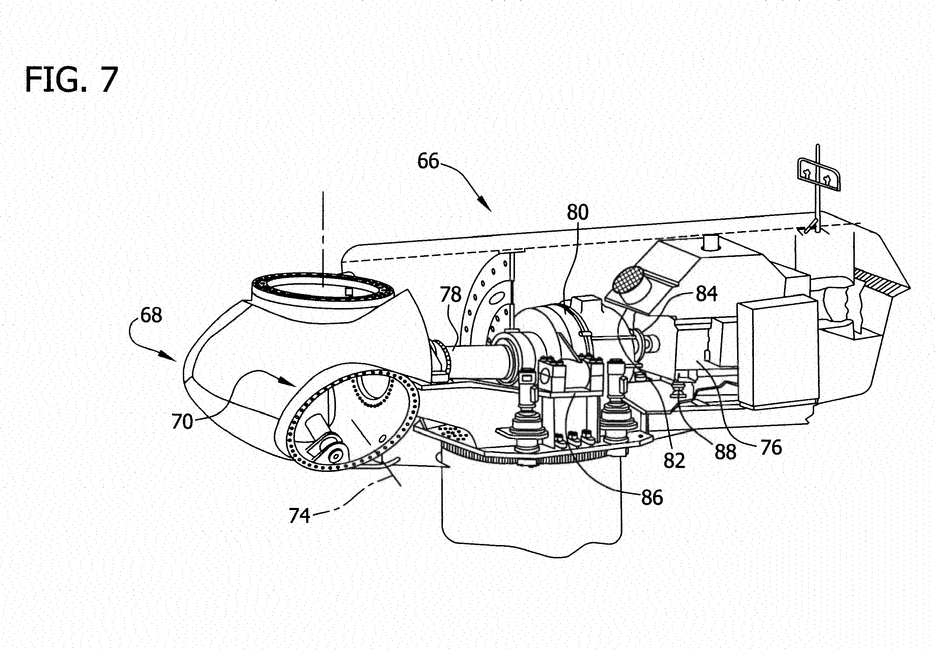

Fig. 6 is a schematic view of an exemplary wind turbine 64 that includes a nacelle 66. Fig. 7 is a partial sectional view of nacelle 66 of exemplary wind turbine 64. Various components of wind turbine 64 are positioned in a housing 67 of nacelle 66. In the exemplary embodiment, rotor 68 includes three pitch assemblies 70. Each pitch assembly 70 is coupled to an associated rotor blade 72 (shown in Fig. 6), and modulates a pitch of associated rotor blade 72 about pitch axis 74. Only one of three pitch assemblies 70 is shown in Fig. 2.

As shown in Fig. 7, rotor 68 is rotatably coupled to an electric generator 76 positioned within nacelle 66 via rotor shaft 78 (sometimes referred to as either a main shaft or a low speed shaft), a gearbox 80, a high speed shaft 82, and a coupling 84. Rotation of rotor shaft 78 rotatably drives gearbox 80 that subsequently drives high speed shaft 82. High speed shaft 82 rotatably drives generator 76 via coupling 84 and rotation of high speed shaft 82 facilitates production of electrical power by generator 76. Gearbox 80 is supported by support 86 and generator 76 is supported by support 88.

In the exemplary embodiment, generator 76 includes magnetic core 12 that facilitates energy conversion from rotating blades 72. Cooling device 16 couples to core 12. As discussed above, cooling device 16 facilitates heat transfer out of core 12 while facilitating flow of magnetic flux 34 through core 12. Additionally, cooling device 16 facilitates reducing eddy current losses and magnetizing losses 36 from core 12. Accordingly, cooling device 16 enables enhanced operation of generator 76. In alternative embodiment, cooling device 42 couples to generator 76 to enable enhanced operation of generator 76.

Cooling device can be integrated within new manufacture of electrical devices or within existing electrical devices. In one embodiment, the cooling device includes the electrical insulator that facilitates flow of magnetic flux across the air gap and through the conductor. The insulator also facilitates reducing core and coil losses emanating from the air gap. Additionally, the cooling device facilitates heat transfer out of the core and coils.

One technical effect of various cooling device embodiments described herein may include utilizing the insulator to facilitate flow of magnetic flux across the air gap and through the core. Another technical effect of the insulator may include reducing core and coil losses emanating from the air gap. A further technical effect may include utilizing the heat transfer element to transfer heat from the core.

Exemplary embodiments of the electrical devices, cooling device, and methods of manufacturing the cooling device are described above in detail. The electrical device, cooling device, and methods are not limited to the specific embodiments described herein, but rather, components of the electrical device and/or the cooling device and/or steps of the method may be utilized independently and separately from other components and/or steps described herein. For example, the cooling device and methods may also be used in combination with other electrical devices and methods, and are not limited to practice with only the electrical device as described herein.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the prefererd mode, and also to enable any person skilled in the art to practice the invention, including making and using any layers or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A cooling device for an electrical apparatus having an air gap disposed within a core, the device comprising:
   a heat transfer element coupled to the core, said heat transfer element comprising a first material to facilitate transferring heat out of the core; and,
   an electrical insulator coupled to said heat transfer element, said electrical insulator comprising a second material to facilitate flow of magnetic flux across the air gap.
2. The heat transfer device of clause 1, wherein said first material comprises a different composition than said second material.
3. The heat transfer device of any preceding clause, wherein said first material comprises a thermally conductive material.
4. The heat transfer device of any preceding clause, wherein said second material comprises a non-thermally conductive material.
5. The heat transfer device of any preceding clause, wherein said second material comprises a low electrical conductivity and high resistive material.
6. The heat transfer device of any preceding clause, wherein said second material comprises a non-electrically conductive material.
7. The heat transfer device of any preceding clause, wherein said second material comprises at least one of a plastic, glass and silicone material.
8. The heat transfer device of any preceding clause, wherein said heat transfer element comprises a cooling channel.
9. The heat transfer device of any preceding clause, wherein said insulator comprises a hose.
10. The heat transfer device of any preceding clause, further comprising a thermal fastener configured to facilitate coupling together said heat transfer element and said electrical insulator.
11. A wind turbine, comprising:
   a nacelle having a housing;
   a generator operatively positioned within the housing, said generator comprising a magnetic core having an air gap and a conductive coil disposed about said magnetic core;
   a heat transfer element coupled to said core, said heat transfer element comprising a first material to facilitate heat transfer out of said core; and,
   an electrical insulator coupled to said heat transfer element, said electrical insulator comprising a second material to facilitate flow of magnetic flux across the air gap.
12. The wind turbine of any preceding clause, wherein said first material comprises a different composition than said second material.
13. The wind turbine of any preceding clause, wherein said first material comprises a thermally conductive material.
14. The wind turbine of any preceding clause, wherein said second material comprises a non-thermally conductive material.
15. The wind turbine of any preceding clause, wherein said second material comprises a low electrical conductivity and high resistive material.
16. A method of manufacturing an electrical apparatus, said method comprising:
   disposing a conductive coil around a magnetic core having an air gap disposed therein;
   disposing a heat transfer element between the core and the coil to facilitate heat transfer out of the core;
   disposing an electrical insulator between the air gap and the coil, the electrical insulator configured to facilitate flow of magnetic flux through the core; and,
   operatively coupling the heat transfer element to the electrical insulator.
17. The method of any preceding clause, further comprising coupling the electrical insulator to the heat transfer element.
18. The method of any preceding clause, wherein the heat transfer element comprises a different composition than the electrical insulator.
19. The method of any preceding clause, wherein the electrical insulator comprises a non-thermally conductive material.
20. The method of any preceding clause, wherein the electrical insulator comprises a low electrical conductivity and high resistive material.

## Claims

1. A cooling device (16) for an electrical apparatus (5) having an air gap (22) disposed within a core (12), the device (16) comprising:
a heat transfer element (24) coupled to the core (12), said heat transfer element (24) comprising a first material (32) to facilitate transferring heat out of the core (12); and
an electrical insulator (26) coupled to said heat transfer element (24), said electrical insulator (26) comprising a second material (40) to facilitate flow of magnetic flux (34) across the air gap (22).

2. The cooling device (16) of claim 1, wherein said first material (32) comprises a different composition than said second material (40).

3. The cooling device (16) of any preceding claim, wherein said first material (32) comprises a thermally conductive material.

4. The cooling device (16) of any preceding claim, wherein said second material (40) comprises a low electrical conductivity and high resistive material.

5. The cooling device (16) of any preceding claim, wherein said second material (40) comprises a non-electrically conductive material.

6. The cooling device (16) of any preceding claim, wherein said heat transfer element (24) comprises a cooling channel (50).

7. The cooling device (16) of any preceding claim, further comprising a thermal fastener (38) configured to facilitate coupling together said heat transfer element (24) and said electrical insulator (26).

8. A method of manufacturing an electrical apparatus (5), said method comprising:
disposing (520) a conductive coil (14) around a magnetic core (12) having an air gap (22) disposed therein;
disposing (530) a heat transfer element (24) between the core (12) and the coil (14) to facilitate heat transfer out of the core (12);
disposing (540) an electrical insulator (26) between the air gap (22) and the coil (14), the electrical insulator (26) configured to facilitate flow of magnetic flux (34) through the core (12); and,
operatively coupling (550) the heat transfer element (24) to the electrical insulator (26).
